# EUROPEAN PATENT APPLICATION

(11) **EP 1 881 417 A1**
(43) Date of publication of application: **23.01.2008**
(21) Application number: 06117685.5
(22) Date of filing: 21.07.2006
(51) Int. Cl.: G06F 17/24

(54) **Process and system for producing an electronic book**

(71) Applicant: Infodoc Technology Corporation, 221 Sijhih City (TW)
(72) Inventor: Shao, Shin-Chung Infodoc Technology Corporation, 221, Sijhih City (TW); Kao, Chuan-Kai Infodoc Technology Corporation, 221, Sijhih City (TW)
(74) Representative: Beck, Michael Rudolf

(57) **Abstract**

An e-book allowing note and corrigendum sharing as well as differential update is produced using vector graphics satisfying XML syntax, and a script program is embedded in or linked to the e-book. The script program allows a user to add various kinds of note markups to the e-book, including fluorescent marker, text annotation, handwriting note, bookmark, digital blackboard record, post-it note, highlight, voice, memo, tracking information, etc. The e-book also allows an e-book editor to correct any error in the e-book. The note markups and corrigenda may be uploaded via network, and be shared among other users by way of differential update.

## Description

### FIELD OF THE INVENTION

The present invention relates to a process and system for producing an electronic book (e-book) allowing note and corrigendum sharing as well as differential update, in which XML (extensible Markup Language) vector graphic technique is applied to the technical fields involving e-book production and e-learning.

### BACKGROUND OF THE INVENTION

An e-book is an electronic medium that is composed of digital contents but presented in the form of book pages, and may be browsed using a computer, a personal digital assistant (FDA), or other electronic apparatus. Currently, file formats available for producing most e-books include PDF (Portable Document Format), Word, and HTHL (HyperText Markup Language) . The e-books may be generally divided into two major types, namely, off-line e-books and on-line e-books, depending on whether the e-books could be read off-line or not. By "off-line e-book", it means an e-book file that may be downloaded via network or reproduced using an access device and then stored on a computer or other electronic devices at the user end, so that a user may read the file off-line at any time. And, by "on-line e-book", it means an e-book that could only be read on-line when a user has been linked to a specific server to open the e-book file, and the e-book file is not stored on the computer at the user end when the user is disconnected from the server.

Generally speaking, the off-line e-book is advantageous because it could be read off-line without the need of downloading the e-book each time. In addition, since every user may have his own copy of the off-line e-book, any user may add personal comprehensions, annotations, and marks to the e-book when being supported by appropriate software. For instance, an e-book produced using PDF may be added with highlights, annotations, and bookmarks via Acrobat Reader provided by Adobe, USA. However, the off-line e-book has the disadvantage of unable to be synchronously updated along with the original e-book. When it is desired to keep an updated version, a user has to download the e-book of new version again. However, all the notes made on the previous off-line copy of the e-book are not automatically copied to the newly downloaded e-book.

On the other hand, the on-line e-book is advantageous because it is updated from time to time. However, a user has to link to the network and download the on-line e-book each time, and inevitably increases the load of network. Moreover, since all the users use the same one e-book version located in a server, the users are not allowed to add personal annotations and notes to the on-line e-book.

Both the off-line and on-line e-books of the prior art have the following three disadvantages:
(1) Not supporting differential update: By "differential update", it means a file is partially updated only at where any change occurs, without the need of updating the entire file. Currently, whenever there is a small part of the e-book that requires update due to, for example, corrigenda or rewriting of a certain chapter or section, a user usually has to download the whole e-book again without the possibility of updating only the changed chapters or sections.
(2) Not providing sufficient note markup function: For an e-book to function like a conventional book, the e-book should at least allow a user to add one or more different note markups to the e-book, including fluorescent marker, annotation, bookmark, post-it note, handwriting note, etc. Usually, such personal note markups are not saved when the e-book is updated.
(3) Not allowing sharing of note markups : For an e-book to be more useful in the field of e-learning, the e-book should be able to provide the function of sharing note markups among group members. For example, it is often necessary for the notes written on a digital blackboard by a teacher, the highlights and annotations added to an e-book by a teacher, electronic lecture sheets issued to students, on-line tests in classroom, or note markups and digital memos added to the e-book by students to be shared among specific group members and added to the e-books of other members. However, most conventional e-books do not provide these functions.

It is therefore tried by the inventor to eliminate the drawbacks existed in the conventional e-books by providing a process and system for producing an e-book that allows note and corrigendum sharing as well as differential update based on XML vector graphic technique, so that an e-book produced according to the present invention not only allows a user to add various types of note markups or corrigenda to the e-book, but also allows such note markups and/or corrigenda to he shared among other users. Moreover, the users of the e-book produced according to the present invention could always have the newest version of the e-book through differential update.

### SUMMARY OF THE INVENTION

A primary object of the present invention is to provide a process and system for producing e-book allowing differential update, whereby when the content of the e-book is partially corrected or changed, a user needs not to download the entire e-book file but only the portions that have been corrected or changed. In this manner, the e-book may be efficiently updated without wasting too many network resources.

Another object of the present invention is to provide a process and system for producing e-book allowing note markups, so that a user may conveniently add various kinds of note markups in the e-book, and such note markups are saved when the e-book is updated, making the e-book more convenient and more helpful in use.

A further object of the present invention is to provide a process and system for producing e-book allowing note and corrigendum sharing, so that a user may conveniently add various kinds of note markups in the e-book, and such note markups may be shared among other specific users, allowing the e-book to be widely employed in distance teaching or e-learning.

In an aspect of the present invention, there is provided a process for producing e-book allowing note and corrigendum sharing as well as differential update. In the process, a digital content file is received by a server and converted into vector graphic elements for storing in a digital content bank; an XML vector graphic e-book is produced based on predetermined production requirements and the vector graphic elements stored in the digital content bank, and a script program is inserted into the e-book, and the produced e-book is uploaded to an e-book bank server; an electronic data processing apparatus at a user end is linked to the e-book bank server, so as to download and open the e-book, which is then stored in the user's electronic data processing apparatus; more than one note markup vector graphic object is inserted into the e-book via the electronic data processing apparatus at the user end, and specified as sharing allowed or sharing not allowed, and the note markup vector graphic objects being specified as sharing allowed are transmitted to the e-book bank server via appropriate browsing software ; and the same e-book may be opened by any other user via an electronic data processing apparatus, and the note markup vector graphic objects allowed to share are automatically downloaded and inserted into the same locations in the user's e-book when the electronic data processing apparatus is in a state linked to the e-book bank server.

In another aspect of the present invention, there is provided a system for producing e-book allowing note and corrigendum sharing as well as differential update. The system includes a server for receiving a digital content file and converting the file into vector graphic elements for storing in a digital content bank; an e-book bank server for storing an XML vector graphic e-book that is produced based on predetermined production requirements and the vector graphic elements stored in the digital content bank and has a script program inserted therein; and at least one electronic data processing apparatus at user end for linking to the e-book bank server via network, so that at least one user may download and open the e-book via the electronic data processing apparatus, and store the e-book therein; wherein a specific user is allowed to insert more than one note markup vector graphic object into the e-book via the electronic data processing apparatus, and to specify whether the inserted note markup graphic objects are to be shared among other users; and the inserted note markup graphic objects specified as to be shared may be uploaded to the e-book bank server via appropriate browsing software, so as to be automatically downloaded and inserted into any other user's e-book at the same locations when the other user opens the same e-book via his or her electronic data processing apparatus that is linked to the e-book bank server.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a conceptual flow chart showing the process for producing e-book allowing note and corrigendum sharing as well as differential update according to the present invention;
Fig. 2 shows one page of an e-book produced according to the present invention;
Fig. 3 shows the page of Fig. 2 with note markups added thereto; and
Fig. 4 is a conceptual view showing the procedures of differential update for the e-book produced according to the present invention.

### DETAILED DESCRIPTION OF THE PREFERRED EMBODIMENTS

The e-book allowing note and corrigendum sharing as well as differential update produced according to the process and system of the present invention is an XML file composed of vector graphic elements satisfying XML syntax standards and a script program. Each vector graphic element, which will be briefly referred to as "an/the element" hereinafter, in the file represents a part of the content of the e-book, such as one or more lines, one or more paragraphs, one or more chapters and/or sections, one or more illustrations, one or more pages, etc. Every one of the elements is assigned a unique identification (ID) and a group of attributes for identifying information about the source, provider, and last update of the element. All the elements in the original version of the e-book have a default Source attribute of NULL, so as to distinguish them from the note markups added by users. The script program is inserted into the e-book by way of embedding or linking, so that users may insert note markups into the e-book and execute differential update.

One of the advantages of the XML vector graphics is that the Document Object Model (DOM) of the XML would pass back an object reference and other events, including mouseClick, mouseMove, mouseDown, mouseUp, or mouseOver, as well as information about the coordinate of the position of a pointing device when a user uses the pointing device, such as a mouse, or a pen using with a tablet computer or a pen tablet, to act on any one of the elements. These events would trigger a corresponding function in the script program, so that new elements may be inserted into the e-book, attributes of existing elements may be changed, one or more existing elements may be deleted, etc. For example, when a user clicks the pointing device at any position in the e-book, DOM would pass back the event mouseDown and the coordinate of the position at where the pointing device is clicked. When the pointing device is being moved, DOM would constantly pass back the event mouseMove and new displacement coordinates. When the user releases the pointing device, DOM would pass back the event mouseUp. The functions in the script program correspondingly triggered by the events mouseDown, mouseMove, and mouseUp would add a new graphic element representing a path, record the tracking coordinates of the moving pointing device and add the same to the tracking information of the path element, and terminate the record of tracking coordinates, respectively. The new element so obtained would then show an effect of handwriting note in the e-book. For example, when the Stroke Color attribute of the path element is changed to red, a user is allowed to simulate writing a note with a red pen. Or, when the stroke Width and the Opacity attribute of the path element are set to Thicker and Translucent, respectively, the user may use the path element to simulate the effect of using a fluorescent marker.

With these features, a user may dynamically add note markups in the e-book. That is, via the script program embedded in the e-book, the user may add to the e-book more than one vector graphic markup, which is referred to as the note markup vector graphic object, and may include the following different types:
1. Fluorescent marker object: This is a path element for recording the path coordinates of a pointing device when the same is being moved (mouseMove), the pen color selected by the user, the effect of opacity, etc. The fluorescent marker object has a thicker stroke width. A user may use a pointing device, such as a mouse, to mark key points at any place in the e-book with the fluorescent marker.
2. Handwriting note object: This is also a path element similar to the fluorescent marker object but having a thinner and opaque stroke. A user may use a pointing device, such as a mouse, to make notes at any place in the e-book by handwriting.
3. Text annotation object: This is a text element for a user to input text by clicking the pointing device at any place in the e-book. The script program would add a text element in the e-book at the place having been clicked, so as to show the text annotation.
4. Highlight object: This is also a text element similar to the text annotation, except that a default Display attribute for the highlight object is display=none. That is, the highlight is only presented in an icon. The script program would set the Display attribute of the element to TRUE to display the highlighted text only when the user uses the pointing device to click the icon.
5. Post-it note object: This is a group element including a rectangle element and a text element, and a script program allowing a user to move or remove the post-it note. When a user uses a pointing device to click any place in the e-book and inputs text, the script program would create a group element representing the post-it note and inserted to the place clicked by the user. The user may freely move the post-it note to a different post location, or remove the post-it note.
6. Digital blackboard record object: This is a group element including a rectangle element simulating a blackboard, a group of text elements for showing the text written on the blackboard by a user, and a group of path elements for showing the user' s handwriting on the blackboard. The user may start the digital blackboard and then inputs text or handwrites on the blackboard. The script program would record the user's input and add a graphic element to the digital blackboard record group elements.
7. Bookmark object: This is a group element including an image element symbolizing the bookmark, and a group of text elements showing the bookmark content. Ausermay insert abookmark at anyplace in the e-book, and the bookmark would be partially extended from an outer edge of the e-book to simulate the effect of a real bookmark. When the user clicks anybookmark, the e-book would automatically flip pages.
8. Voice object: This is a group element including an icon representing an image element and a hyperlink element. When a user has recorded and filed a voice file, the script program would add an icon in the e-book. The user may click the icon to open the file at a location to which the hyperlink element is pointed.
9. Memo object: This is a group element similar to the digital blackboard record obj ect, and allowing a user to add a memo by handwriting or inputting text.
10.Corrigendum object: This is a group element. When a user finds any error in the e-book, simply clicks the element and inputs an updated content for the error. The script program would create a corrigendum group object to record the ID of the original object, the updated content for the corrigendum, and information about the user and time of update.
11. Tracking information object: When any of the above-mentioned note markup objects is added, the script program would add tracking information to the object, including the user ID, date and time, type of the element added, etc. The default Display attribute for the tracking information is "display=none". When a user moves the pointing device to a certain element, the script program would set the Display attribute of the tracking information of the element to "display=true", so that the user may know by whom and at what time the note markup is inserted.

The above-mentioned note markups and corrigenda added to the e-book by a user may be shared with other users through differential update. When the user adds one note markup vector graphic object, the script program would record the Source attribute of the object as a note markup, so as to distinguish the added object from the original elements. When the user decides to share some of the note markups with other users, simply uploads the note markup vector graphic objects to be shared to the server. Other users who want to adopt these shared note markup vector graphic objects need only to download these objects without the need of downloading the whole e-book file again. That is, the note markups added to the e-book by one user would not be overwritten by the downloaded updates. Since every note tag records the page number and the coordinate point of the note in the e-book, the note is shown as is when being shared with other users.

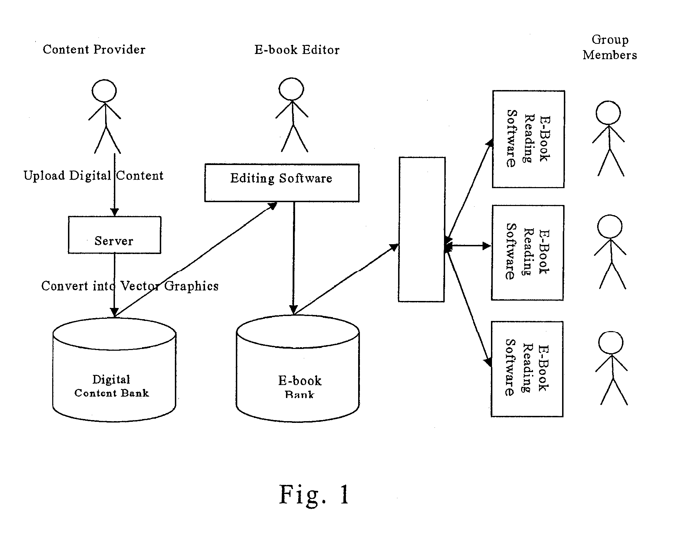

Fig. 1 is a conceptual flow chart showing the process for producing e-book allowing note and corrigendum sharing as well as differential update according to the present invention. In the process, the following steps are included:
(1) A digital content tile is received by a server and converted into vector graphic elements for storing in a digital content bank;
(2) Produce an XML vector graphic e-book based on predetermined production requirements and the vector graphic elements stored in the digital content bank, insert a script program, and upload the e-book to an e-book bank server;
(3) Link an electronic data processing apparatus at a user end to the e-book bank server, so as to download and open the e-book, which is then stored in the user's electronic data processing apparatus;
(4) Insert more than one note markup vector graphic object into the e-book via the electronic data processing apparatus at the user end, and specify whether the inserted note markup vector graphic obj ects are to bc shared with other users or not . The note markup vector graphic objects being specified to be shared are transmitted to the e-book bank server via appropriate browsing software; and
(5) Automatically download the note markup vector graphic objects to be shared and insert the downloaded note markup vector graphic objects into the same locations in another user' s e-book when the same e-book is opened via that user's electronic data processing apparatus that is in the state of linking to the e-book bank server.

Through the above-described steps, different digital contents, including electronic document files, pictures, animations, sounds, texts, etc., may be uploaded to the server by a content provider, and converted by appropriate software run on the server into XML vector graphic elements, which are then stored in a digital content bank. The digital content bank may be built in the server or be built in an external databank. An e-book editor may, based on predetermined production requirements, read from the digital content bank the needed contents, which are then edited via appropriate e-book editing software to produce an e-book, and inserts a script program into the e-book. The produced e-book is then stored in an e-book bank. The e-book editing software may be run via the server or the e-book bank server. The e-book is stored in an e-book bank, which may be built in the e-book bank server or be built in an external databank. A user may initialize appropriate e-book reading software via his electronic data processing apparatus, and links to the e-book bank server via a communication network, so as to download, store, and read the e-book. The electronic data processing apparatus may be a personal computer, a notebook computer, a tablet computer, a PDA, or a server. And, the user may handle the above procedures by moving a pointing device, such as a mouse or a pen, which is connected to the electronic data processing apparatus.

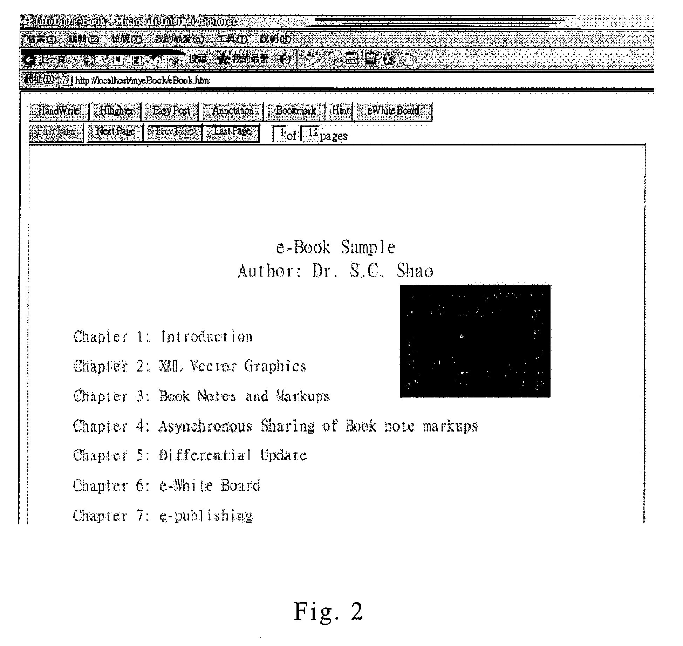

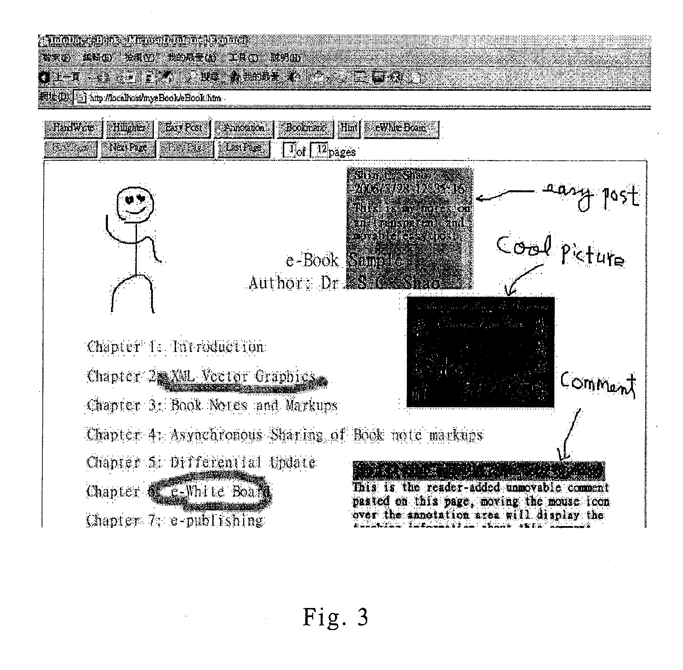

Fig. 2 shows one page of an exemplification of the XML vector graphic e-book produced according to the present invention. When the e-book has been downloaded by a user, various note markup objects or corrigendum objects may be dynamically added to the e-book via the appropriate reading software. Fig. 3 shows the page of Fig. 2 with note markups inserted thereinto. The user may also upload the inserted note markup objects or corrigendum objects to the e-book bank server, so that other users may download via the e-book bank server the inserted note markup objects or corrigendum obj ects, and update the e-book by way of differential update.

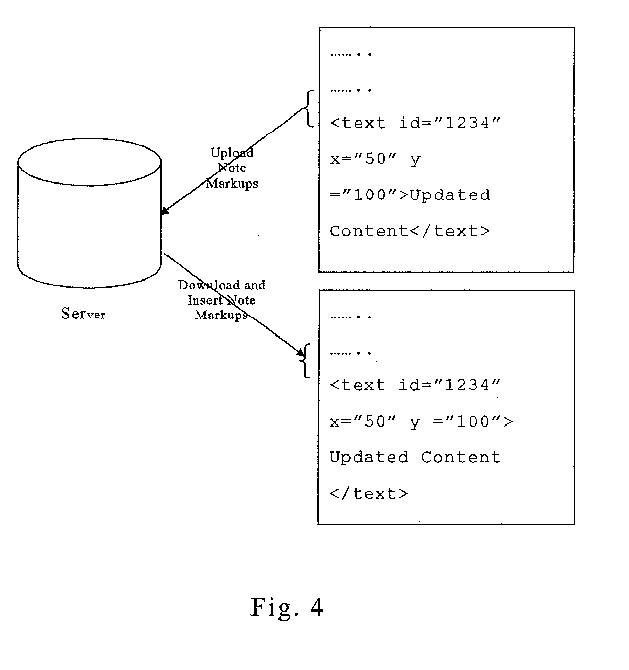

Fig. 4 shows the procedures of differential update. In Fig. 4, the upper right box indicates a certain user' s e-book, into which a text annotation markup element is inserted. The element has an (x,y) coordinate attribute indicating the location at where the element is shown in the e-book. When a differential update is executed, the script program in the upper right e-book would upload the inserted note markup objects to the e-book bank server via network, as shown at the left side of Fig. 4. When other users want to share these note markup objects, they need only to download the note markup objects. Since every note markup object would record information about the page number and coordinate point of the object in the e-book, the note markup object is shown as is in other users' e-books.

The above-described process for producing e-book allowing note and corrigendum sharing as well as differential update according to the present invention is implemented via a system, which includes a server, an e-book bank server, and a plurality of electronic data processing apparatus. The electronic data processing apparatus are linked to the e-book bank server via a wired or a wireless communication network to communicate with the e-book bank server.

The server is used to receive a digital content file and converts the latter into vector graphic elements for storing in a digital content bank. The e-book bank server is able to provide appropriate e-book editing software, with which an e-book editor produces an XML vectorgraphice-bookbased on predetermined production requirements and the vector graphic elements in the digital content bank, and inserts the script program. The produced e-book is then stored in the e-book bank.

The electronic data processing apparatus are used by different users for linking to the e-book bank server via network, so that the users may download and open the e-book for browsing, handling, and storing in the users' electronic data processing apparatus. A user may insert more than one note markup vector graphic object into the e-book and specifies whether the inserted objects are to be shared among other users or not. The note markup vector graphic objects being specified as to be shared are transmitted to the e-book bank server via appropriate browsing software. When another user is linked to the e-book bank server and open the same e-book, the note markup vector graphic objects to be shared are automatically downloaded and inserted into the same locations in that user' s e-book.

The present invention has been described with a preferred embodiment thereof and it is understood that many changes and modifications in the described embodiment, such as combining or splitting the functions or steps included in the system or the process of the present invention, or combining the server and the e-book bank server into one server, can be carried out without departing from the scope and the spirit of the invention that is intended to be limited only by the appended claims.

## Claims

1. A process for producing e-book allowing note and corrigendum sharing as well as differential update, comprising the steps of:
(a) Causing a digital content file to be received and converted by a server into vector graphic elements for storing in a digital content bank;
(b) Producing an XML vector graphic e-book based on predetermined production requirements and the vector graphic elements stored in the digital content bank, inserting a script program into the e-book, and uploading the produced e-book to an e-book bank server;
(c) Allowing a user to link to the e-book bank server via an electronic data processing apparatus at the user end, so as to download and open the e-book, which is then stored in the user's electronic data processing apparatus;
(d) Allowing a user to insert more than one note markup vector graphic object into the e-book via the electronic data processing apparatus at the user end, and to specify whether the inserted note markup vector graphic objects are to be shared among other users or not; and allowing the note markup vector graphic objects specified as to be shared to be transmitted to the e-book bank server via appropriate browsing software; and
(e) Allowing another user to open the same e-book via his or her own electronic data processing apparatus, and to automatically download and insert the shared note markup vector graphic objects into the same locations in that user's e-book when the electronic data processing apparatus is in a state of linking to the e-book bank server.

2. The process for producing e-book allowing note and corrigendum sharing as well as differential update as claimed in claim 1, wherein the script program is attached to the e-book in a manner selected from the group consisting of embedding in and linking to the e-book, so that an XML vector graphic object may be added to, deleted from, or changed in the e-book.

3. The process for producing e-book allowing note and corrigendum sharing as well as differential update as claimed in claim 1, wherein the electronic data processing apparatus is selected from the group consisting of a personal computer, a notebook computer, a tablet computer, a PDA, and a sever.

4. The process for producing e-book allowing note and corrigendum sharing as well as differential update as claimed in claim 1, wherein the note markup vector graphic object may be any one or any combination of the items selected from the group consisting of a fluorescent marker object, a text annotation object, a handwriting note object, a bookmark, a digital blackboard record object, a post-it note object, a highlight object, a voice object, a memo object, a corrigendum object, and a tracking information object.

5. The process for producing e-book allowing note and corrigendum sharing as well as differential update as claimed in claim 1, wherein the differential update means that, when the e-book is updated in the content thereof, any difference in the objects in the e-book is automatically compared and only those objects that have been changed are downloaded to update the user's e-book.

6. A system for producing e-book allowing note and corrigendum sharing as well as differential update, comprising:
a server for receiving a digital content file and converting the file into vector graphic elements for storing in a digital content bank;
an e-book bank server for storing an XML vector graphic e-book produced based on predetermined production requirements and the vector graphic elements stored in the digital content bank and having a script program inserted therein; and
at least one electronic data processing apparatus at user end for linking to the e-book bank server via network, so that at least one user may download and open the e-book, and stores the e-book in the user's electronic data processing apparatus;
wherein the user is allowed to insert more than one note markup vector graphic object into the e-book via the electronic data processing apparatus, and to specify whether the inserted note markup graphic objects are to be shared among other users or not; and the inserted note markup graphic objects specified as to be shared may be uploaded to the e-book bank server via appropriate browsing software, so as to be automatically downloaded and inserted into any other user's e-book at the same locations when the other user opens the same e-book via his or her electronic data processing apparatus and is linked to the e-book bank server.

7. The system for producing e-book allowing note and corrigendum sharing as well as differential update as claimed in claim 6, wherein the script program is attached to the e-book in a manner selected from the group consisting of embedding in and linking to the e-book, so that an XML vector graphic object may be added to, deleted from, or changed in the e-book.

8. The system for producing e-book allowing note and corrigendum sharing as well as differential update as claimed in claim 6, wherein the electronic data processing apparatus may be any one of the items selected from the group consisting of a personal computer, a notebook computer, a tablet computer, a PDA, and a sever.

9. The system for producing e-book allowing note and corrigendum sharing as well as differential update as claimed in claim 6, wherein the note markup vector graphic object may be any one or any combination of the items selected from the group consisting of a fluorescent marker obj ect, a text annotation obj ect, a handwriting note object, a bookmark, a digital blackboard record object, a post-it note object, a highlight object, a voice object, a memo object, a corrigendum object, and a tracking information object.

10. The system for producing e-book allowing note and corrigendum sharing as well as differential update as claimed in claim 6, wherein the differential update means that, when the e-book is updated in the content thereof, any difference in the objects in the e-book is automatically compared and only those objects that have been changed are downloaded to update the user's e-book.
